(19) **Europäisches Patentamt / European Patent Office / Office européen des brevets**

(11) **EP 1 744 119 A1**

(12) # EUROPEAN PATENT APPLICATION

(43) Date of publication:
**17.01.2007 Bulletin 2007/03**

(51) Int Cl.:
***G01B 9/02*** *(2006.01)*

(21) Application number: **05106529.0**

(22) Date of filing: **15.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Proximion Fiber Systems AB**
**164 40 Kista (SE)**

(72) Inventors:
• **Stubbe, Raoul**
 **182 74, STOCKSUND (SE)**
• **Sahlgren, Bengt**
 **132 31, SALTSJÖ-BOO (SE)**

(74) Representative: **Pierrou, Mattias et al**
 **Awapatent AB,**
 **P.O. Box 45 086**
 **104 30 Stockholm (SE)**

(54) **Swept-source optical coherence tomography**

(57)    An apparatus for determining the topography, shape, or form of (machined) objects is disclosed. The apparatus operative to perform consecutive measurements of the optical path difference (OPD) between a reference surface on one hand and a series of laterally displaced points on one or more partially reflecting surfaces of an object on the other hand. The inventive apparatus comprises light source means for emitting light that is swept in optical frequency; means for exposing said surfaces to light from said light source means; means for combining and detecting the light reflected back by said surfaces; means for performing a frequency analysis of the detected signal; and means for calculating OPD from the obtained frequencies. The speed of the frequency sweep is preferably above 50 GHz/$\mu$s.

*Fig. 2*

EP 1 744 119 A1

Fig. 3

**Description**

Technical field

The present invention relates to an optical method and arrangement for analyzing shape, dimension, topography and the like. More particularly, the invention relates to such analysis performed based on swept-source optical coherence tomography (SS-OCT).

Technical background

Hence, the invention is directed towards dimensional analysis, specifically optical characterization of either the shape or topography of a partially reflecting surface or the topography of several partially reflecting surfaces in a partially transparent object.

Typically, this kind of measurement in practical applications is performed using an optical probe that directs light to and collects reflected light from the sample surface or surfaces. Such probe may contain one or more optical fibers with suitable focusing optics attached to them. The reflected light signal is utilized for determining either the distance to the surface or surfaces relative to a reference surface, or the distance between the surfaces themselves. An apparent advantage of using optical methods is that they are performed without contact, and they also excel in accuracy and measurement speed.

There are several established optical methods to measure distances between partially reflecting surfaces with high accuracy based on e.g. white-light interferometry or confocal microscopy.

Both traditional white-light interferometry and confocal microscopy rely on accurate translation of a mirror, a lens or the object proper under investigation. In order not to compromise the accuracy, this translation needs to be slow, something which for several reasons imposes severe limitations to the applicability of these methods outside laboratory environment. First, the slowness makes these measurements susceptible to errors caused by thermal drifts and vibrations. The disturbance, which could be anything from vibrations from nearby machining tools to a patient not able to hold still, will cause the surface to move unpredictably during the measurement and cause blurring of the signal. Second, since the task is to characterize a surface, be it the inner shape of a drilled hole or a body part e.g. for finding a retinal detachment in the eye, the time per measurement point will be critical to make the measurement both practically and economically viable. In fact, many applications require the measurement to be fast enough to create a picture of the surface or surfaces at video rate. Third, even if it is possible to speed up the measurement by tracking the surface, it will take time to find the starting point and it will typically be required to slow down the measurement every time there is a step in surface. Finally, in many applications, especially in metrology, when positioning the measurement probe relative to the sample surface, there is a risk that the probe will collide or interfere with either the sample object or some other object. The probe may therefore be damaged or even break, or cause harm to the object under investigation.

In traditional white-light interferometry, or Optical Coherence Tomography (OCT), light from a low-coherence source, (a source with a comparatively very broad spectrum compared to a laser) is launched into a two beam interferometer, typically in some kind of Michelson interferometer configuration. The surface (or surfaces) of the sample acts as a mirror defining the so called sample arm of the interferometer. A translatable mirror, called the reference mirror, defines the reference arm of the interferometer. When the length difference of the two interferometer arms, often referred to as the optical path difference (OPD), is within the coherence length of the source, usually in the order of 10 $\mu$m, visible fringes will be produced by the interferometer. The reference mirror is then scanned to find the exact points of maximum fringe visibility. Each fringe visibility maximum corresponds to a partially reflecting surface at a certain depth.

Recently, however, it was realized that the scanning mirror in the set-up described above can be replaced by a fixed reference mirror if the optical signal of the interferometer before detection is separated into its optical spectral components. Instead of finding the maximum fringe visibility while moving the reference mirror, the depth information is retrieved by performing a Discrete Fourier Transform (DFT) of a sampled optical frequency spectrum. The DFT squared constitutes a so called periodogram and it turns out that each frequency in the periodogram represents a distance relative to the reference mirror surface.

There are two more or less equivalent ways of realizing such a scheme: Either the detector in the traditional set-up is replaced by a spectrometer, so called Fourier domain OCT, (FD-OCT) (see for example A. F. Fercher et al., Opt. Commun. 117, 43-48, 1995), or the low-coherence source is replaced by a frequency swept source, (SS-OCT) (see for example S. R. Chinn et al., Opt. Lett. 22, 340-342, 1997). Although very different from a hardware point of view, FD-OCT and SS-OCT, are really two aspects of the same principle. In SS-OCT the spectral filtering is accomplished before splitting of the light into the two interferometer arms, while in FD-OCT the filtering is accomplished after combining the light from the arms. The principle of using a swept source to interferometrically determine the distance between two surfaces was in fact known before its application to OCT became established (see for example Uttam *et al.*, J. Lightwave Technol. **3**, 971, 1985).

Since the DFT is construed by discrete frequencies, so is the periodogram. The frequency step between two adjacent frequencies, which can be interpreted as the distance resolution, is inversely proportional to the optical wavelength range of the spectrometer or of the swept source - the wider the range the better the resolution. A 40 nm wavelength range at 1550 nm center wavelength corresponds to a distance resolution of about 25 $\mu$m. This means that two surfaces need to be at least this distance apart to be discernable as two separate surfaces. It is however possible to measure the distance between a reference surface and a surface subject to measurement with much higher accuracy, provided they are spaced more than the resolution limit apart.

To illustrate this fact, consider the case of measuring the distance to a single surface. The resulting spectrum then becomes a simple sinusoidal function of optical frequency and the problem of determining the distance between the reference mirror and the surface reduces to estimating the frequency of this sinusoid. Merely finding the discrete frequency in the DFT with the highest amplitude will limit the distance resolution, as stated above. The sampled spectrum, however, contains information that makes it possible to interpolate between the discrete frequencies. Using certain algorithms, a much better frequency estimate can be accomplished and the distance can often be determined with an accuracy several orders of magnitude better than what is given by the nearest discrete frequency. This is, of course, under the assumption that the position of the reference mirror is known with sufficiently good accuracy and that the systematic errors are known and compensated for, e.g. through calibration.

As noted above, there are several methods available for high accuracy frequency estimation. The theoretical lower limit of the accuracy is, under the assumption that the noise in the measurement is Gaussian, given by the Cramér-Rao lower bound (CRLB). The expression for the CRLB that can be deduced for estimation of a single frequency embedded in noise shows that even in the presence of significant noise it is possible to make measurements of high accuracy if the number of sample points is sufficiently high. In attempts to decrease the acquisition time this is of paramount importance since a large detection bandwidth also means increased noise.

The available measurement depth, which is the maximum distance between the reference surface and a measurement surface, is determined by the frequency range of the DFT. The highest frequency present in the DFT is in turn determined by the Shannon sampling theorem and depends on how densely the optical spectrum can be sampled. In FD-OCT this depends on the resolution of the spectrometer and in the case of SS-OCT either on line width of the source or the number of samples during one frequency sweep.

In a practical measurement situation the object is typically scanned to generate a surface profile, or in the case of a partially transparent object a two-dimensional image with depth on one axis and a lateral coordinate on the other axes. According to the terminology inherited from traditional scanning white-light interferometry, a scan along the depth axis is called an A-scan and the scan along the lateral axes a B-scan.

It will be useful to have a proper understanding of the mathematical principle behind the type of measurements disclosed herein. Therefore, a brief explanation of how path length difference may be deduced from a frequency spectrum will be given in the following.

As a simplified model for either the SS-OCT or FD-OCT, consider a two-beam interferometric set-up with an ideally white light source and a scanning bandpass filter placed either before the point where light from the source is divided into the two interferometer arms or after the point where it is combined from the arms before detection. The shape of the filter is assumed to be Gaussian. For a measurement of a single sample surface, the photocurrent generated by the detected optical signal during a scan, $i_D(t)$, can be written as:

$$i_D(t) = \rho S(\nu)\left[R_{ref} + R_s + 2\exp\left(-\frac{L}{l_c}\right)\sqrt{R_{ref}R_s}\cos\left(\frac{4\pi}{c}\nu(t)L + \varphi\right)\right] \qquad (1)$$

where $\rho$ is the responsivity of the detector, $S(\nu)$ is the instantaneous optical power that is transmitted through the scanning bandpass filter, $R_{ref}$ and $R_s$ are the power reflectivities of the reference mirror and the sample surface, respectively, $c$ is the speed of light, $\nu(t)$ is the mean frequency of the light passing the filter as a function of time, $L$ is the optical path difference (OPD) between the reference arm and the sample arm, $\varphi$ is an arbitrary phase constant, and $l_c$ is the coherence length. The coherence length $l_c$ is determined by the full width at half maximum (FWHM) of the filter, $\Delta\nu_{1/2}$, according to:

$$l_c = \frac{4\ln 2}{\pi}\frac{c}{\Delta\nu_{1/2}} \qquad (2)$$

The responsivity of the detector is given by $\rho = \eta q_e / h\nu$, where $\eta$ denotes the detector quantum efficiency, $q_e$ is the electron charge, and h is Plank's constant.

Assuming that $R_{ref}$ and $R_s$ both are constants, it is realized that the detected signal can be divided into a bias term, constituted by first two terms within the brackets of equation (1), and a modulation term, the third term within the brackets.

If the sweep of the bandpass filter is linear in optical frequency such that

$$\nu(t) = \nu_0 t , \qquad\qquad (3)$$

the result is the following proportionality of the modulation part of the detected signal:

$$V_{D\mathrm{mod}}(t) \propto \cos\left( \frac{4\pi L \nu_0}{c} t + \varphi \right) \qquad\qquad (4)$$

From equation (4) it is realized that the detected signal contains a single frequency that is proportional to the arm length difference of the interferometer. Estimating this frequency given by

$$f_D = \frac{2\nu_0 L}{c} \qquad\qquad (5)$$

will thus give an estimate of the difference in distance between the reference mirror and the sample surface.

The resolution in a measurement of this kind will, in most practical situations, be limited due to noise. There are five main sources of noise that should be considered when optimizing the signal-to-noise ratio (SNR):

(a) receiver noise, induced by the detector dark current and by Johnson noise in the amplifier circuit;
(b) photon induced shot noise (quantum noise), which can be divided into the noise induced by the signal itself and by other background optical power;
(c) excess noise, which is caused by the noise characteristics of broadband sources;
(d) phase noise, which is due to the frequency instability of the bandpass filter; and
(e) intensity noise, which stems from fluctuations in the power of the optical source as well as fluctuation in the characteristics of the bandpass filter.

One recipe to make sure the receiver noise is not the limiting factor is usually to increase the optical output power of the source until the shot noise exceeds the receiver noise. Depending on the detection bandwidth and the amplification needed to make the A/D-conversion efficient, different light levels will typically be required to accomplish such quantum noise limited operation.

The phase noise is proportional to the arm length difference of the interferometer and to the line width of the source. Phase noise can normally be adequately handled by appropriate design considerations.

Excess noise and intensity noise can be reduced to a minimum if balanced detection is applied, which means that a scheme is implemented that enables to a large extent suppression of the first two terms of equation (1) through subtraction. There are several schemes proposed in the literature and the person of ordinary skill in the relevant art will know how to implement this. The excess and intensity noise of the signal term is however not entirely suppressed. However, if the reflectance in the sample arm is much lower than in the reference arm, this still means that the noise terms are significantly reduced. In the case where the sample arm reflectivity is in the same order of magnitude as the reference arm reflectivity, the signal to noise ratio will still be good enough to estimate the frequencies.

In order to suppress the amplitude and excess noise in the signal term, a closed loop is preferably introduced which locks the signal.

As noted above, in FD-OCT the spectral filtering is carried out after combining the light from the arms of the interferometer. This can be accomplished, as in the model above, by placing a scanning filter in front of a detector. To make more efficient use of the light generated by the source, however, it may be preferred to have the scanning filter and the single detector replaced by a dispersive element and an array of detector elements. All photons generated by the source are then used to generate the OCT signal instead of only those that have passed the scanning filter. The model above still applies but the resolution is no longer given by the filter width of the scanning filter, but rather by the resolving power of the detector array.

Due to the limited number of detectors (typically at most 2048) in any array based spectrometer, the resolution is usually not better than roughly 0.05 nm, giving a maximum measurement depth of 12 mm for a center wavelength of 1550 nm. In reality the number of detectors that are in fact illuminated by the dispersive element over the wavelength range of the low-coherence source can be significantly less. For OCT in biomedical applications a few millimeters measurement range may sometimes be enough but in many metrology applications much longer ranges are required.

The number of sample points is also relevant when making high accuracy frequency estimates in the presence of noise, in line with the Cramér-Rao Lower Bound (CRLB) discussed above. Thus, a limited number of sample points in the spectrum will limit the accuracy of the distance measurement.

In SS-OCT the number of sample points is instead limited by the number of samples in time that are performed during one sweep. Since this number can be quite high this usually does not seriously limit neither the measurement range nor the attainable accuracy. The swept sources used in SS-OCT are typically based on laser action in a cavity containing a scanning filter. In order to reach sweep repetition rates above kilohertz, which is typically required for both real-time tomography and surface topography measurements, the sweep rate should be in the nanometer per microsecond range. The solutions that have been proposed are based on either micromechanically scanned Fabry-Perot filters or scanning polygons with dispersive filters attached to them. It has turned out very difficult to make these arrangements to work outside a very stable laboratory environment. The swept laser source has two further drawbacks. First, the coherence length is often much longer than necessary which means that reflections from surfaces other than the surfaces of the sample will cause spurious signals, which are hard to filter out. Second, these laser sources are prone to mode hopping, which introduces an uncertainty of the laser frequency as a function of time. A critical parameter in both tomography and topography is the sweep to sweep repeatability. Very often the intensity of the light reflected back from the sample is very low and the signal from several sweeps has to be integrated to obtain a sufficient signal to noise ratio. Both the mode-hopping and the mechanical instability makes that very difficult when using lasers.

Summary of the invention

As has become evident above, a fast scanning filter with suitable filter characteristics used in either the FD-OCT configuration or in the SS-OCT configuration, would be a powerful means to accomplish a tool for dimensional analysis, either for measuring distance to an object, establishing the topography of a surface, or for tomography of partially transparent objects.

Some considerations should be made regarding the light source used for SS-OCT. The most efficient way from a light budget point of view is to use the scanning filter in the SS-OCT configuration. Ideally, a light source containing such a filter (or having the corresponding frequency characteristics) should be able to scan with a speed preferably in excess of 50 GHz/$\mu$s, it should have a wide tuning range, exceeding 5 THz, a source line width less than 10 GHz but more than 1 GHz wide, scan very linearly in optical frequency, exhibit a very good scan to scan repeatability, and most importantly be environmentally robust. In case a longer measurement range is desired, an even narrower line width may be provided for the light source in order to increase the coherence length. For example, the line width may be as narrow as 0.1 GHz, approximately corresponding to a coherence length of 2 m.

According to the present invention, a swept light source (SLS) is devised such that most, if not all, of the abovementioned requirements regarding sweep speed, optical frequency range, line width, linearity, repeatability, and robustness are fulfilled, and it is described how this enables an improved method for surface topography measurements. In particular it enables real-time multiplexing between multiple probes or probes equipped with means for multiple output directions.

An embodiment of the SLS is to combine in sequence a broadband source, a scanning filter, and if necessary an amplifier stage. The broadband source could be an edge-emitting light emitting diode (ELED), a superluminecent diode (SLD) or a fiber fluorescent source. The scanning filter could for example be a scanning Fabry-Perot filter, but there a no such filters available that fulfill the above requirements yet.

A preferable approach is therefore to use applicant's own proprietary acousto-optic scanning filter concept (see e.g. US-A-6,510,256, which is incorporated herein by reference). A filter according to this principle fulfills all the requirements stated above. It scans with a speed in excess of 150 GHz/$\mu$s, has a scanning width of more than 5 THz, a line width of about 4 GHz, and exhibits excellent linearity and repeatability. Last but not least it contains no moving parts on a macroscopic scale, which makes it very environmentally robust. The amplifier stage can be either a rare earth doped fiber or waveguide amplifier, like an EDFA (erbium doped fiber amplifier), or a semiconductor optical amplifier (SOA) of some kind. Typically, static filters will be included to control the envelope of the optical power as a function of frequency over the optical frequency sweep range. As will be appreciated, this kind of acousto-optic scanning filter may also be used in the FD-OCT configuration.

Another embodiment of an SLS is to make a fiber loop including an amplifier, a scanning filter and a tap fiber coupler. One of the leads of the tap coupler works as the output of the SLS. Optionally, a broadband source can be used to seed the loop through a second coupler. Again the broadband source, amplifiers and scanning filter can be of the various kinds described in the previous embodiment. The spontaneous emission of the amplifier or the light from the broadband seed source passes the filter, and the filtered light then returns to the amplifier. The length of the loop, the line width, and the scanning speed of the filter determines how many turns the light will travel in the loop. A typical number is three turns. The line width of this version of the SLS will be narrower than the filter but it will still be much wider than the typical line width of a single frequency diode laser.

A variation of this embodiment of an SLS is a so-called sigma configuration. In this case, the tap coupler is replaced by an optical circulator having the first and third ports thereof connected to the loop. The scanning filter is placed inside the fiber loop, but the amplifier stage is now located outside the loop with one fiber lead connected to the second port of the circulator, and a spectrally broad reflecting fiber Bragg grating (FBG) is implemented in the other fiber lead. Spontaneously emitted light from the amplifier will be reflected by the FBG and then amplified when passing the amplifier in the opposite direction. Following entry into the circulator at the second port thereof, this light will subsequently exit from the third port of the circulator. The light will then pass the scanning filter and thus obtain a spectrum as a function of time given by the filter characteristics of the scanning filter. Arriving again at the circulator, now at the first port thereof, the light will exit from the second port and again pass the amplifier, and this now spectrally narrow light will be further amplified.

The sigma configuration thus constitutes a resonant path or cavity where the light will be filtered once every passage and amplified twice. If the roundtrip length of the resonant path is made sufficiently short, the spectral filter will only have changed its pass band frequency so much that the main part of the optical frequencies that were able to pass the previous time will be able to pass again. The number of complete passages completed by a single photon inside the resonant cavity is determined by the sweep speed or sweep rate of the filter, the spectral width of the pass band of the filter, and the length of the resonant cavity. If the broadband FBG is made only partially reflecting, some of the light generated in the cavity will escape through the fiber lead containing the FBG. Optionally, an ELED or similar may be added outside the sigma path via a tap coupler to seed the resonator.

The two main advantages that may be obtained with the sigma configuration is that the amplifier stage is more efficiently used, and a line width that is narrower than what is determined by the scanning filter alone may be obtained.

Yet another embodiment is to use a swept diode laser source. However, unless the sweep rate is very high, the line width will be substantially smaller than if the acousto-optic scanning filter principle referred to above is used, resulting in a much longer than desired coherence length. The final system will therefore be sensitive to spurious reflections from bad splices, connectors and the like. In addition it may be difficult to control the diode laser such that the sweep is linear in optical frequency and does not suffer from sudden, uncontrolled jumps in frequency, so called mode hops. Nevertheless, if these issues are resolved this approach could be a viable alternative to the other approaches described above.

It should also be noted that, in any embodiment, the light source using a scanning filter should preferably be equipped with means for eliminating any frequency that may pass the scanning filter outside its frequency sweep range. For example, this may be done by adding a (static) bandpass filter that is slightly narrower than the frequency range of the scanning filter, either before or just after said scanning filter.

Hence, a solution based on the acousto-optic scanning filter principle above is preferred.

In addition, there is disclosed a probe design suitable for use with the inventive measuring apparatus. Features and advantages of this probe design are outlined in more detail in the description below.

Brief description of the drawings

In the following detailed description, reference is made to the drawings, on which:

Fig. 1 shows a block schematic of an arrangement according to the invention;
Fig. 2 shows a schematic example of the functional part implementation of the invention;
Fig. 3 shows schematically a probe suitable for using with the present invention;
Fig. 4 shown schematically the probe of Fig. 3 in greater detail;
Fig. 5 shows schematically a swept frequency light source suitable for use with the inventive apparatus.

Detailed description

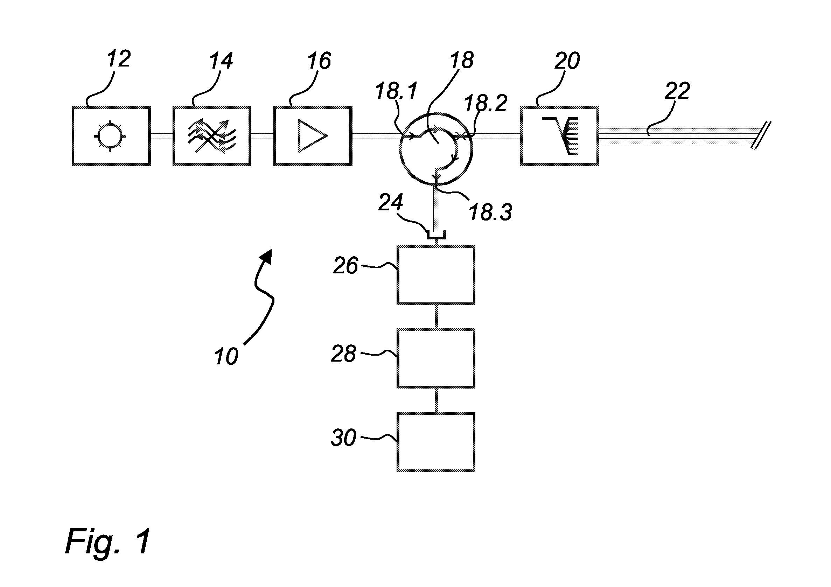

By way of introduction, the overall structure of an arrangement according to the present invention will be described with reference to Figure 1 of the drawings. Figure 1 shows a block schematic of a preferred arrangement 10 for measuring dimension, profile etc. of a physical structure. As mentioned in the introduction above, the arrangement is based on the SS-OCT (swept-source optical coherence tomography) principle for accurately measuring distance to an object under investigation.

The arrangement comprises a broadband light source 12 ("white light source"), preferably in the form of an edge-emitting light emitting diode (ELED). The output from this light source is coupled to a scanning filter 14, preferably an acousto-optic scanning optical filter (ASOF), providing an output in the form of a time-varying, frequency swept signal. The output from the ASOF 14 is coupled to an optical amplifier 16, preferably a semiconductor optical amplifier (SOA), which has the purpose of amplifying the frequency-swept signal to power levels sufficient for performing the measurement. The amplified optical output from the SOA is coupled to the first port 18.1 of an optical circulator 18. The second port 18.2 of the optical circulator is coupled to an 1x8 optical switch 20, which is operative to split the amplified optical signal into a plurality (in this example, up to eight) optical fibers 22. Each of these fibers is, in turn, coupled to a probe (not shown in figure 1) suitable for performing the measurement. A preferred probe for carrying out the measurement will be described in more detail below. Any light coupled back from the probe will re-enter the optical circulator 18 at the second port 18.2 thereof, and be directed to the third port 18.3 of the circulator. This third port constitutes the optical output from the measurement arrangement 10. At the third port of the circulator, there is provided a photodetector 24 for detecting the amount of light outputted from the arrangement. The output of the photodetector 24 is coupled to signal processing means 26, such as to an A/D-converter and means for performing the required signal analysis, including a discrete Fourier transformation (DFT) of the detected signal and preferably also an interpolation procedure for enhancing the accuracy of the measurement. Preferably, the results of the measurement is provided to the user by means of a suitable graphic user interface (GUI) 28. Normally, the arrangement will also be coupled to a log unit 30 for keeping track of measurements as they occur, and for subsequent analysis of the acquired data.

Hence, before entering the interferometer at the probe, the light from the SLS is preferably launched into the first port of the three port circulator. Optionally, a tap splitter can be incorporated even before the circulator where a small fraction of the light is tapped off. The light from port two of the circulator is then led to an optional switch which can sequentially distribute (time multiplex) the light signal between a plurality of fibers, each being equipped with its own interferometer. On its way back, the light reflected in from the interferometers again passes the switch and enters the circulator at port two, but now leaves the circulator at port three.

The interferometer that is used to create the interference between light reflected from the sample surface and from the reference mirror can be designed in various ways. One of many challenges in selecting the proper design for the interferometer is to make sure that the OPD only depends on the position of the sample surface. Changes in ambient temperature, pressure, vibrations, etc. often cause OPD changes that are indistinguishable from a change in position of the sample. In many applications, as e.g. OCT for tissue analysis, this is a minor problem since it is the relative distances between the scattering surfaces that are of interest. In metrology, however, it is often necessary to establish an absolute distance between the sample and one or more reference mirrors. A way to minimize the impact of environmental disturbances is to, to the largest possible extent, let the reference arm and the sample arm of the interferometer set-up share the same physical path. A preferred probe design along these lines will be presented below. For now, assume that the light from the SLS is launched into a fiber that is common to both the reference arm and the sample arm until a point close to the sample surface. This means that the reference mirror may be located in the probe or what can be referred to as the interferometer head.

There are two main ways to configure the interferometer. The first is a two beam configuration, such as the Michelson interferometer, and the second is a linear (Fizeau) configuration. The latter has the advantage that it can be made smaller, that it is easier to assemble, and that the OPD is equivalent to the sample arm length. In the linear Fizeau configuration, in some cases, the reference surface can even be a well defined surface within the sample itself. The two beam configuration, on the other hand, has the advantage that it has two output ports, for example facilitating the balanced detection scheme discussed in more detail below.

Finally, after leaving port three of the optical circulator, the light signal is converted into an electrical signal in the detection stage. There is a large variety of detectors that can be used depending on wavelength, the expected level of optical power, etc. In one preferred embodiment the detector is a PIN-diode that generates a current driving a transimpedance amplifier (TIA). This kind of amplifier is really a current-to-voltage converter, so the output from the TIA is a voltage. This voltage is then sampled by an A/D converter, converting the analog signal into a digital signal.

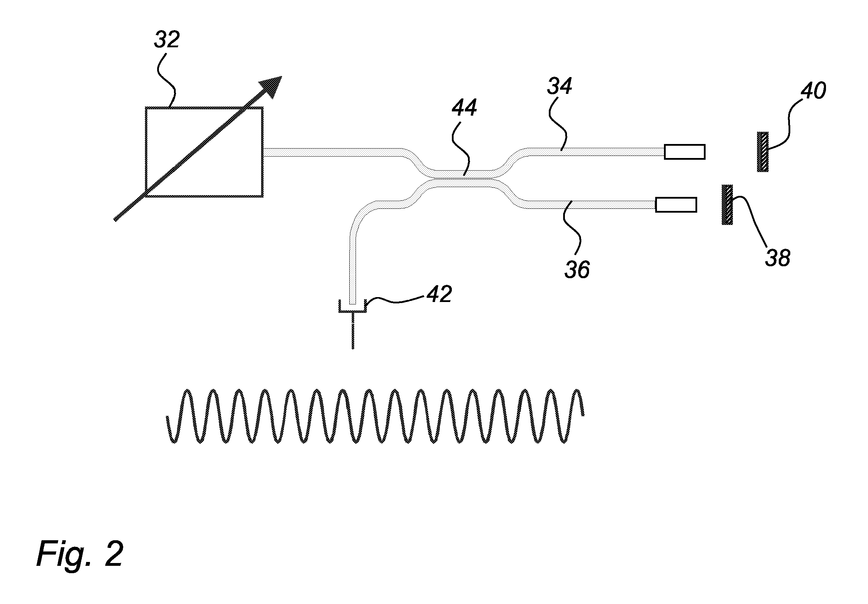

Fig. 2 schematically shows the functional parts of the arrangement, assuming a Michelson configuration as an illustrative example. The swept light source 32 delivers a frequency swept optical signal to each of the interferometer arms 34, 36, wherein one arm includes a static reference mirror 38 and the other arm includes a reflecting surface 40 of the object under investigation. The signals from the two arms 34, 36 are combined and detected by a photodetector 42. Due to the frequency swept light employed in the interferometer set-up, the detected signal will exhibit periodical fluctuations which depend on the OPD between the interferometer arms, as shown schematically below the detector 42 in the figure. For the case when there is only a single reflecting surface 40 effecting the measurement arm, the detector output will, in the ideal case, be a sinusoidal signal. As explained in the introductory section above, the OPD between the interferometer arms may then be derived by performing a Fourier analysis of the detected signal. Typically, the Fourier analysis is performed by way of a discrete Fourier transformation (DFT) of the detected signal. Increased accuracy of the measurement, i.e. the true OPD between the interferometer arms, may then be achieved by performing an interpolation between discrete values of the DFT. The interferometer arms may be connected by means of e.g. a 3dB fiber coupler 44.

In another embodiment, a second detector (not shown) can be included in the detection stage. To that second detector, light is coupled from either the tap splitter mentioned above or, if available, from a second port of the interferometer. In the case that time multiplexing between interferometers is deployed, a second switch or a star-coupler is preferably placed in front of the second detector.

One reason for using a two detector scheme is that when the reflectivity of the sample 40 is much lower than that of the reference mirror 38, the first two terms of equation (1), the DC terms, are much larger than the third term, the signal term. The signals from the respective ports of the interferometer are approximately the same except that the signal term has an opposite sign. This means that by subtracting the signals from the two detectors, the DC terms can be effectively eliminated. The advantage of eliminating the DC-terms is that the noise emanating from excess and intensity is reduced and, which is equally important, the dynamic range of the A/D converter is much better utilized.

One important characteristic which should be paid special attention when designing the detection scheme is its linearity. If, for example, the amplifier is nonlinear, there will be intermodulation between the frequencies present in the sampled spectrum, which will generate additional peaks in the periodogram. These peaks may then mistakenly be interpreted as reflecting surfaces in the sample.

With a single sweep lasting only 40 $\mu$s, the sampling frequency of the A/D conversion naturally needs to be high in order to resolve frequencies corresponding to large OPDs. A 50 MHz sampling rate is theoretically sufficient to resolve a frequency of 25 MHz, which corresponds to an OPD of slightly more than 20 mm. Today there are A/D converters available having both very high sampling frequencies and good resolution (12-bit and higher). The choice of A/D converter is mostly a matter of cost.

If necessary, a technique to artificially enhance the sampling frequency and thus the spectral resolution without increasing the real sampling frequency can be adopted. This may be accomplished by acquiring a group of, say 8, consecutive spectra where in each of these "subsamplings" the sample/hold circuit is shifted an eighth of the sample period in time relative to the former subsampling. Putting these eight spectra together renders an effective sampling frequency eight times higher than the real sampling frequency. The total spectrum is now acquired in 640 $\mu$s, which is still very fast, but the resolution is eight times better.

The large amounts of data generated in SS-OCT makes real-time processing of these data quite a challenge. Using a sampling frequency of 50 MHz and a 12-bit A/D converter, each sweep generates about 3kByte of data in about 2000 sample points. If the 8-fold subsampling scheme referred to above is adopted, the number of sampling points increases to 16000.

Due to imperfections in the transmission characteristics of the scanning filter, both in linearity and transmitted intensity, it may be required to perform a linearization and calibration operation on the sampled data. This can be accomplished either by using a look-up table that has been created beforehand by careful calibration, or by using a reference interferometer with an accurately known OPD. In the latter case, since the reference interferometer has a known response, the calibration table can be created in real time. If the sweep of the filter is not perfectly linear in frequency, then the samples are not perfectly equidistant in optical frequency. Each sample point should then preferably be made equidistant in optical frequency by an interpolation algorithm. An example of such an algorithm is the so called nearest neighbor algorithm. Samples are also calibrated in amplitude after or before the linearization.

The reference interferometer may either be addressed using a switch that intermittently switches from the probe fiber or fibers to a fiber leading to one or several reference interferometers, or by having the reference interferometers in series (in-line) with the probe. In the latter case, the OPDs of the reference interferometers should preferably be selected such that they appear outside the OPD measurement range addressed by the probe. Moreover, such reference interferometer should preferably be located at a distance well outside the coherence length from the reflecting surfaces of the probe, in order to avoid interference with the measurement interferometer arms.

In the case of measuring a single surface, as often is the case in metrology, it is of interest to measure the OPD between the reference mirror and the sample surface with considerably higher accuracy than what is given by the discrete frequency step of the DFT. As mentioned above there are several methods available of using the information in the sampled spectrum to find out where, in between the grid points of the Fourier frequencies, the true maximum is located. An example of a suitable method to accomplish this is to use interpolation in the discrete spectrum or the so-called Iterated Weighted Phase Averager (IWPA) method. In a paper by Santamaria and coworkers, it is shown that for this application, the IWPA method is the most promising candidate [see Santamaria et al., Mechanical Systems and Signal Processing 14, 1-16 (2000)].

By virtue of the fast acquisition, the large measurement depth, and the fact that the entire depth range (the A-scan) is contained in each sweep, the inventive measurement concept also opens up for a significantly improved probe design.

A challenge in both metrology and biomedical applications is the actual positioning of the measurement probe relative to the object to be measured. Typically, the probe may be mounted on one or several translation stages which, as fast as possible, places the probe at a suitable position to start the measurement. This means that there may be a significant risk that the probe collides with the object to be measured.

Because of the fast acquisition, it is possible to build a probe that measures in many directions quasi-continuously. The probe can thus be equipped with what may be called "surround vision". A fast switch may switch between fibers in about one millisecond. This means that it is possible to acquire distance measurements in eight directions in less than fifteen milliseconds.

The surround vision capability alone is however not enough to enable the probe to detect an approaching surface. Equally important is the capability of the SS-OCT to detect a surface at any depth within the measurement depth range. This combined with the large depth range provided by the narrow line width of the scanning filter enables an early discovery of a surface and thus provides means to avoid collision and to position the probe correctly. Nevertheless, the probe may preferably be equipped with some kind of mechanical safety release for the event the probe hits the object anyway.

In tissue imaging, the probe is typically complemented by a scanning mirror to provide the B-scan direction. In metrology the B-scan is instead accomplished by translation stages or the like moving the probe over the surface, thereby allowing acquisition of a surface profile. The surround vision capability now provided can be used to define the correct position of the probe before performing the B-scan. Another application is to follow a reference surface, while simultaneously measuring the sample surfaces. The ability to measure in many directions simultaneously, especially in mutually opposite directions, is also very useful in metrology applications where the measurement task is to establish the inside shape of a cavity or the dimensions of a cylindrical hole or bore.

In a preferred embodiment of the probe, a cable from the output of the switch, containing at least seven fibers, leads to a strain relief boot attached to the housing of the probe. Inside the housing, the fibers are fanned out and connected to an optical system containing means to provide collimation or slight focusing of the light coming out of the fibers.

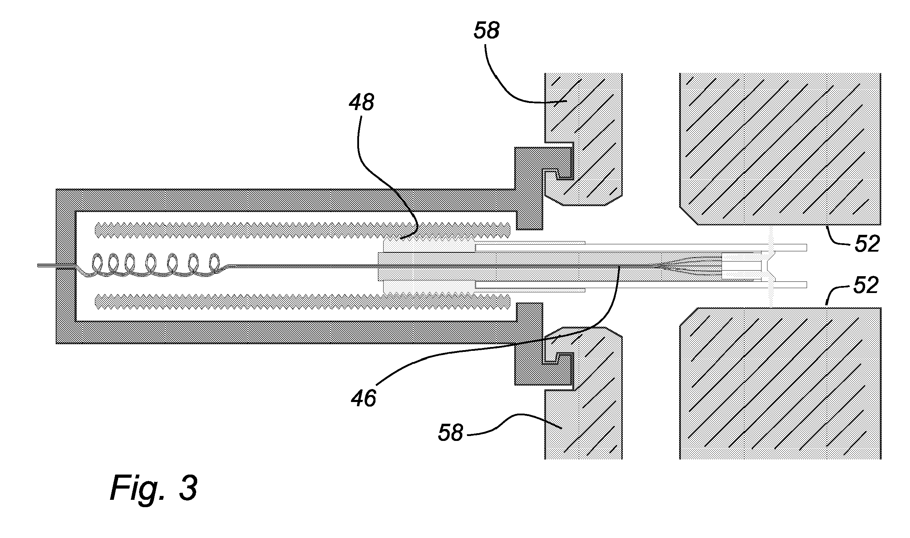

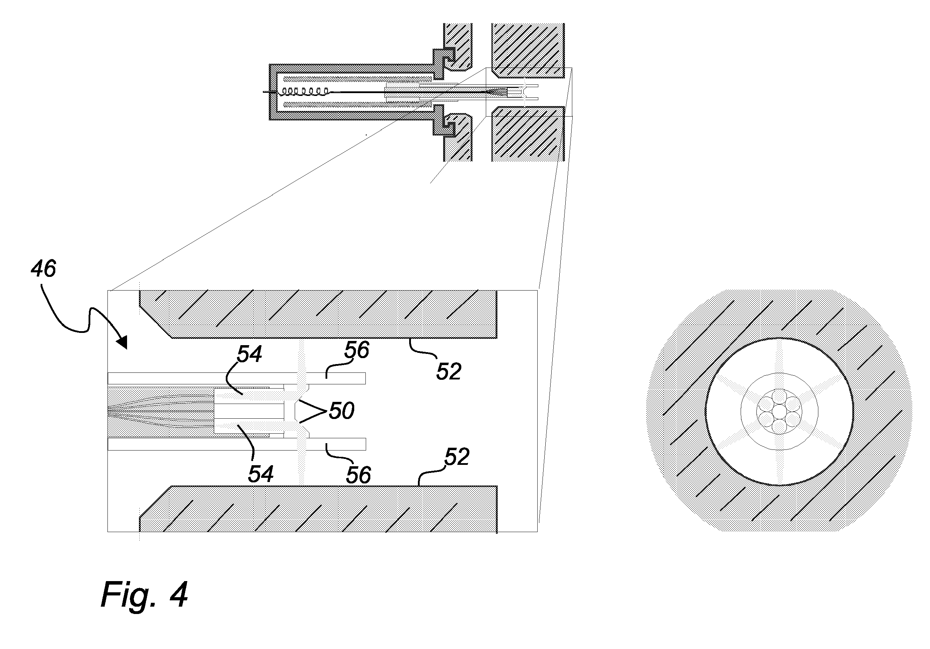

A preferred implementation of the probe is schematically shown in Figs. 3 and 4. The probe proper 46 is mounted in a linear translation stage 48 for effecting linear translation of the point of measurement. The probe has a measurement end, containing reflecting means 50 (such as internal reflection prisms) for directing light from the optical fibers laterally towards the surface under investigation 52. Within the probe, the optical fibers are preferably arranged as shown on the right hand side of Fig. 4, namely in a regular pattern of six fibers arranged annularly, and one fiber arranged centrally. By having the individual fibers arranged annularly around the probe end, counter-propagating measurement beams (in fact, counter-directed interferometer arms in a Fizeau configuration) may be obtained. This is an advantage in that correction may be made for the case that the probe is not perfectly centered in e.g. a hole of circular symmetry.

Light from the individual optical fibers is preferably collected, collimated, or even slightly converged, by focusing optics 54 at the end of the probe. Such focusing optics may conveniently be implemented by gradient index lenses (GRIN lenses).

In order to form the interferometer arms in a Fizeau configuration, the probe also includes a reference surface 56 e.g. in the form of a partially transparent tube or similar (e.g. made from glass) surrounding the probe measurement end. It is also conceivable that the tube or similar is faceted, in order to reduce influence from curvature of the partially reflecting surface. This reference surface 56 forms one of the mirrors (one of the arms) in a linear Fizeau interferometer. The other arm of the interferometer will be formed by one or more reflecting surfaces 52 of the object under investigation, e.g. a bore or a hole as schematically shown in Figs. 3 and 4. The 1x8 optical switch 20 is operative to divide light from the swept light source between the individual fibers, to provide sequential measurement in different directions by the individual interferometer arms.

The centrally located optical fiber of the probe may be used for measuring distances to objects in front of the probe, in a manner similar to the measurement described above. This may be useful for determining whether the probe is located close to any object that may be damaged by the probe, or that may itself damage the probe. In such case, the reference surface should also be present in the longitudinal direction of the probe (not shown).

Optionally, the eighth output from the optical switch may be coupled to a reference interferometer, which may be used for calibration purposes. Preferably, such reference interferometer includes a plurality of partially reflecting surfaces in order to provide a plurality of calibration measurement signals.

In addition, and as also shown schematically in Figs. 3 and 4, the probe and the probe fixture are preferably attached to a template 58 designed for the object to be measured. This may facilitate accurate placing of the probe for performing the measurement.

As will be understood by those of ordinary skill in the art, the probe described so far is designed to measure the object under investigation at six locations (corresponding to the six interferometer arms). For an even more accurate measurement, it may be desired to acquire data from more points. This may be accomplished by providing for the probe to be rotated slightly about its longitudinal axis. If such rotation is possible over an angle of 60 degrees, the full 360 degrees may be covered by the exemplary probe.

The focusing optics can be accomplished by putting together a set of seven gradient index (GRIN) lenses with a pitch of 0.25 or more for the wavelength of the SLS. (Pitch 0.25 means that the light coming out of the GRIN lens is collimated.) One practical advantage of choosing the number seven is that GRIN lenses are typically comprised of circular rods which are easy to assemble into a package consisting of six GRIN lenses surrounding a seventh GRIN lens in the middle. Each fiber from the cable 22 is suitably attached to the optical axis of a respective GRIN lens. The result is one central beam surrounded by six peripheral beams.

Another possible way is to attach all fibers to a single GRIN lens of pitch 0.25. Each fiber can be viewed as a point source attached to the surface of the lens. The position of the point source determines the angle at which the collimated beam leaves the lens at the opposite end. Thus, by attaching the fibers at particular positions, the GRIN lens can be used both for collimation and for fanning out the beams. In the case of using seven fibers, one fiber is attached at the optical axis of the GRIN lens and the six other fibers are attached at a predetermined radius from the optical axis and spaced $\pi/3$ radians in angle. A special ferule can be made to preposition the fibers before attaching them to the GRIN lens.

Similar arrangements can, of course, be implemented using conventional lenses. One advantage of using GRIN lenses, however, is that they are more compatible with optical fibers from an assembly point of view.

With the beams from the fibers fanned out, either by a plurality of GRIN-lenses or by a single GRIN-lens arrangement according to above, each of the peripheral beams is reflected about 90 degrees outwards by, for example, a mirror or a prism. The central beam is not deflected and continues in the axial direction of the probe. Each beam then passes a window in the housing of the probe. This window can be made of, for example, sapphire glass to ensure robustness and that the outer surface is not prone to being scratched. This has the further advantage that the probe may be easily cleaned.

After passing the window, the light is reflected by the sample and any portion of the reflected light falling within the numerical aperture of the optical fiber will be led back to the detection stage. With this embodiment it is thus possible to measure in six radial directions as well as in the forward direction of the probe.

In another embodiment, it may be possible cover all radial angles by twisting either the optics within the probe or the whole probe back and forth over an angle exceeding 60 degrees. Similarly, the light beam in the forward direction can be scanned by placing a beam scanning arrangement at the end of the probe.

The reference mirror can be arranged at various points in the probe. In a linear (Fizeau) configuration, the reference mirror can be a reflection from either the fiber/GRIN lens surface, the GRIN lens end surface, the inner surface of the probe window, or the outer surface of the probe window. The currently most preferred choice is to utilize the outer surface of the probe window, since this leads to a situation where the reference arm and the sample arm share the maximum common path. In a two-beam arrangement the prism used to direct the light outwards can also work as a beam splitter, and a reference mirror can be arranged on the backside of the prism.

Special care should be taken to avoid reflections at other positions than at the reference mirror and the sample surface. Antireflection coatings on certain surfaces may become necessary, but often the best way to avoid spurious back reflections is to tilt the angle of all surfaces sufficiently to make the back reflected light fall outside the aperture of the optical fiber.

As switches come in powers of two, $1x2^n$, a consequence of using the seven fiber probe mentioned above will be that an 1x8 switch is utilized for the multiplexing. The unused port of the switch can therefore be coupled to, for example, a reference interferometer for calibration purposes along the lines of what has been proposed above.

As mentioned above, when using applicant's own acousto-optic scanning filter as outlined in e.g. US-A-6,510,256, each sweep lasts about 40 μs. With a duty cycle of 50%, the sweep repetition rate then becomes 12.5 kHz. In many situations it is sufficient with the information generated in one sweep to establish the distance(s) to the sample surface(s). Hence, the acquisition time per lateral point on the surface, or an A-scan in the case of tomography, can be as low as 80 μs. In the case of surface imaging, assuming a video frame rate of 25 Hz, an acquisition rate of 12.5 kHz would render 500 lines in the B-scan direction. One advantage of the scanning filter proposed herein is thus that it enables extremely fast acquisition.

A further advantage over other scanning and tuning filters is the very narrow filter characteristics of the acousto-optic filter. Being only about 4 GHz wide it gives a coherence length in the order of 60 mm. This means that the possible "measurement depth" is of this order assuming that there is sufficient light coming back to the probe from this distance.

While the scanning filter has an operating frequency range within which the sweep is performed, other frequencies outside this operating range may also be passed through the scanning filter. In order to avoid detrimental effects from such light having a frequency outside the operating range, it is preferred to include also a static filter or other means that eliminate any such frequency outside the operating range of the scanning filter. To this end, a bandpass filter may be added either upstream or just downstream of the scanning filter.

The fast acquisition thus enables a multi-beam probe that quasi-continuously can measure objects in several directions. The characteristics of the source allows for large differences in distance between the reference surface of each beam and the sample surface(s). Finally the method of SS-OCT eliminates the need to track the surface(s). The combination of these features gives, inter alia, the following advantages for practical surface topography and tomography:

a) Faster and more precise positioning of the probe relative to the sample subject to investigation.
b) Means to avoid collision between probe and sample or probe and other objects.
c) The ability to maintain the probe in a certain position or trajectory of positions by using reference surfaces.
d) The ability to use the probe for a wide range of OPDs. For example when measuring mechanical parts with a broad set of dimensions.

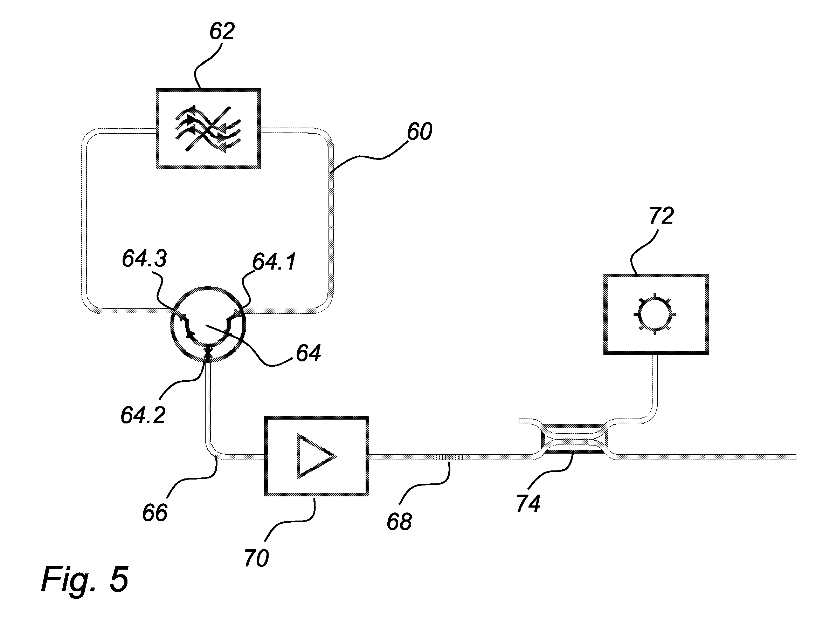

A suitable light source for providing the frequency swept light in the measuring apparatus is schematically shown in figure 5. This light source is of the sigma configuration briefly described in the introduction above. Included in the light source is a fiber loop 60, in which there is incorporated a scanning filter 62 and an optical circulator 64. As described in the introduction, the scanning filter is preferably implemented as an acousto-optic scanning filter in line with the teachings of US-A-6,510,256. The optical circulator has a first, a second and a third port 64.1, 64.2 and 64.3, respectively, wherein the first and third ports thereof are connected to the loop 60 and the second port thereof is connected to a fiber lead 66 outside of the loop. In the external fiber lead 66, there is provided a spectrally broad reflecting fiber Bragg grating (FBG) 68, and an amplifier stage 70. As shown in the figure, the amplifier stage is located between the FBG 68 and the optical circulator 64. This location of the amplifier stage has the result that spontaneously emitted light from the amplifier stage 70 will be reflected by the FBG 68 and then amplified when this light passes the amplifier 70 on its way towards the circulator 64. This light will enter the circulator 64 at the second port 64.2 thereof, and will exit the circulator through the third port 64.3. During its passage around the loop 60, the light will pass the scanning filter 62, and will thereby be given a spectrum as a function of time given by the filter characteristics of the scanning filter 62. Arriving again at the circulator, now at the first port 64.1 thereof, the light will exit from the second port 64.2 and again pass the amplifier 70, and this now spectrally narrow light will be further amplified.

It should be noted that, if the roundtrip length of the loop 60 is sufficiently short, the spectral filter 62 will have virtually the same transmission characteristic for two successive passages of a particular light frequency. This means that the main part of the optical frequencies that could pass the scanning filter the previous time will be able to pass again. Generally, the number of complete passages completed by a single photon of light inside the resonant loop is determined by the sweep rate of the filter and the spectral width thereof, and the length of the loop.

If the FBG 68 is made only partially reflecting for the relevant optical frequencies, some of the light generated in the resonant cavity will escape through this FBG 68 in the fiber lead 66. Thus, this may be used as the output from the frequency swept light source. An alternative would be to use a fiber tap coupler (not shown) in the loop to provide the output.

It is particularly preferred that the FBG 68 has a reflection bandwidth that is slightly narrower than the frequency sweep range of the scanning filter, in order to substantially eliminate frequencies that may pass said scanning filter outside its operating frequency range.

Optionally, an ELED 72 or similar may be employed for seeding the resonator. Light from the ELED or similar is then conveniently coupled into the loop 60 through the fiber lead 66 by means of a tap coupler 74. An additional light source of this kind for seeding the device may not be required when the spontaneous emission from the amplifier 70 is in itself sufficient for driving the light source.

**Claims**

1. An apparatus for determining the topography, shape, or form of objects, the apparatus being operative to perform consecutive measurements of the optical path difference, OPD, between a reference surface on one hand and one or more laterally displaced points on one or more partially reflecting surfaces of an object on the other hand, the apparatus comprising:

light source means for emitting light that is swept in optical frequency;
means for exposing said surfaces to light from said light source means;
means for interferometrically combining and detecting the light reflected back by said surfaces;

means for performing a frequency analysis of the detected signal; and
means for calculating OPD from the obtained frequencies.

2. The apparatus according to claim 1, wherein said light source means comprises, in series,
a broadband light source;
a frequency scanning filter; and
an optional amplifier stage.

3. The apparatus according to claim 1 or 2, further comprising:

means for performing a Discrete Fourier Transform, DFT, of the detected signal; and
means for interpolating between discrete frequencies given by said DFT with a certain frequency sweep range to enhance the accuracy of the obtained OPD.

4. The apparatus according to any one of the preceding claims, wherein the frequency scanning filter of said light source means is an optical band pass filter that has a scanning speed of more than 50 GHz/$\mu$s.

5. The apparatus according to any one of the preceding claims, wherein the light source means has an instantaneous 3dB line width of less than 10 GHz and larger than 1GHz.

6. The apparatus according to any one of the preceding claims, further comprising a switch operative to distribute light from the light source means between several interferometers and to recollect the signals from the same interferometers onto a common detector in a time multiplexed manner.

7. The apparatus according to claim 6, wherein the different interferometers are connected to a common probe but are used for measuring in different spatial directions.

8. The apparatus according to claim 7, wherein the measurement directions are arranged in pairs in mutually opposite directions.

9. The apparatus according to claim 7 or 8, wherein at least one measurement direction is chosen to be substantially orthogonal to the direction of the motion of the probe while establishing the topography of the surface.

10. The apparatus according to any one of the preceding claims, wherein the scanning filter is a fiber Bragg grating based acousto-optic scanning filter.

11. Use of the apparatus according to any one of the claims 1-10 for measuring the inner shape and size of a cavity.

12. Use according to claim 11, wherein a measurement is performed with the apparatus on a known reference interferometer at intervals or simultaneously with the cavity measurement, and where thus generated reference data is used to recalibrate subsequent spectra such that the sample points become equidistant in optical frequency.

13. Use according to claim 12, wherein the reference interferometer is made up of several reflecting surfaces to generate a plurality of reference frequencies to recalibrate against.

14. Use according to claim 12 or 13, wherein the reference interferometer is connected to one of the output ports of the switch.

15. A method for determining topography, shape, dimension or form of an object, comprising:

exposing a reference surface and a measurement surface to light from a frequency swept light source;
combining and detecting light reflected back from said reference surface and said measurement surface;
performing frequency analysis of the detected signal;
calculating an optical path difference (OPD) between the reference surface and the measurement surface based on said frequency analysis of the detected signal.

16. The method of claim 15, wherein the light from said frequency swept light source has a scanning speed of more than 50 GHz/$\mu$s.

17. The method of claim 15 or 16, wherein the step of performing frequency analysis comprises performing a discrete Fourier transformation (DFT) of the detected signal.

18. The method of claim 17, further comprising interpolating between discrete frequencies given by said DFT within a certain frequency sweep range to enhance the accuracy of the calculated OPD.

19. The method of any one of claims 15-18, wherein the reference surface and the measurement surface are exposed to light having an instantaneous 3dB line width of less than 10 GHz and larger than 1 GHz.

20. The method of any one of claims 15-19, wherein the frequency swept light source is obtained by launching broad band optical radiation through an optical band pass filter, and scanning said optical band pass filter to obtain frequency swept output.

Fig. 1

Fig. 2

Fig. 3

Fig. 4

Fig. 5

**European Patent Office**

## EUROPEAN SEARCH REPORT

Application Number

EP 05 10 6529

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/047813 A (THE GENERAL HOSPITAL CORPORATION; YUN, SEOK, HYUN, PH., D; BOUMA, BRET) 26 May 2005 (2005-05-26) <br> * abstract * <br> * page 21, line 5 - page 22, line 24 * <br> * page 30, line 20 - page 35, line 17 * <br> * page 43, lines 5-30 * <br> * figures 6,10a * | 1-20 | G01B9/02 |
| X | US 6 485 413 B1 (BOPPART STEPHEN A ET AL) 26 November 2002 (2002-11-26) <br> * abstract * <br> * column 5, line 47 - column 6, line 60 * <br> * column 30, line 57 - column 31, line 34 * <br> * figures 1,2,14,15,20 * | 1-20 | |
| X | US 2004/239938 A1 (IZATT JOSEPH A) 2 December 2004 (2004-12-02) <br> * abstract * <br> * paragraph [0036] - paragraph [0047] * <br> * figures 1a,1b * | 1-20 | |
| X | F.D. NIELSEN, L. THRANE, J. BLACK, A.O. BJARKLEV, P.E. ANDERSEN: "Broad bandwidth light-wave frequency synthesizer in the 1-1.1 um range" PROCEEDINGS OF SPIE, vol. 5709, April 2005 (2005-04), pages 222-230, XP002359967 <br> * page 222 - page 225 * | 1-20 | TECHNICAL FIELDS SEARCHED (IPC) <br><br> G01B <br> G01N <br> G01J |

The present search report has been drawn up for all claims

| Place of search | Date of completion of the search | Examiner |
|---|---|---|
| Munich | 19 December 2005 | Kokkonen, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 10 6529

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2005

| Patent document cited in search report | | Publication date | Patent family member(s) | Publication date |
|---|---|---|---|---|
| WO 2005047813 | A | 26-05-2005 | NONE | |
| US 6485413 | B1 | 26-11-2002 | NONE | |
| US 2004239938 | A1 | 02-12-2004 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6510256 A

**Non-patent literature cited in the description**

- **A. F. FERCHER et al.** *Opt. Commun.,* 1995, vol. 117, 43-48
- **S. R. CHINN et al.** *Opt. Lett.,* 1997, vol. 22, 340-342
- **SANTAMARIA et al.** *Mechanical Systems and Signal Processing,* 2000, vol. 14, 1-16